# FASCICULE DE BREVET EUROPEEN

(11) **EP 2 172 023 B1**
(45) Date de publication et mention de la délivrance du brevet: **19.02.2020**
(21) Numéro de dépôt: 08806067.8
(22) Date de dépôt: 24.06.2008
(51) Int. Cl.: H04N 21/2343, H04N 21/238, H04N 21/2662, H04N 21/6375

(54) **ADAPTATION D'UN FLUX DE DONNEES SCALABLES AVEC PRISE EN COMPTE DES RETRANSMISSIONS**
ANPASSUNG EINES SKALIERBAREN DATENFLUSSES BEI GLEICHZEITIGER BERÜCKSICHTIGUNG VON RÜCKÜBERTRAGUNGEN
ADAPTATION OF SCALABLE DATA FLOW WHILE TAKING RETRANSMISSIONS INTO ACCOUNT

(30) Priorité: 27.06.2007 FR 0704616
(43) Date de publication de la demande: 07.04.2010
(73) Titulaire: Orange, 75015 Paris (FR)
(72) Inventeur: BABONNEAU, Gérard, F-35235 Thorigne-Fouillard (FR); MORY, Emmanuel, F-35830 Betton (FR)
(74) Mandataire: Plasseraud IP
(86) Numéro de dépôt international: PCT/FR2008/051135
(87) Numéro de publication internationale: WO 2009/007586

(56) Documents cités:
- EP-A- 1 781 035
- WO-A-2006/064454
- ZHOURONG MIAO ET AL: "Optimal scheduling for streaming of scalable media" SIGNALS, SYSTEMS AND COMPUTERS, 2000. CONFERENCE RECORD OF THE THIRTY-FOURTH ASILOMAR CONFERENCE ON OCT. 29 - NOV. 1, 2000, PISCATAWAY, NJ, USA,IEEE, vol. 2, 29 octobre 2000 (2000-10-29), pages 1357-1362, XP010535222 ISBN: 0-7803-6514-3
- KUI GAO ET AL: "Real-time scheduling on scalable media stream delivery" ISCAS 2003. PROCEEDINGS OF THE 2003 IEEE INTERNATIONAL SYMPOSIUM ON CIRCUITS AND SYSTEMS. BANGKOK, THAILAND, MAY 25 - 28, 2003, IEEE INTERNATIONAL SYMPOSIUM ON CIRCUITS AND SYSTEMS, NEW YORK, NY : IEEE, US, vol. VOL. 2 OF 5, 25 mai 2003 (2003-05-25), pages II-824, XP002366012 ISBN: 0-7803-7761-3
- KYUNGTAE KANG ET AL: "Dynamic packet scheduling for cdma2000 1xEV-DO broadcast and multicast services" WIRELESS COMMUNICATIONS AND NETWORKING CONFERENCE, 2005 IEEE NEW ORLEANS, LA, USA 13-17 MARCH 2005, PISCATAWAY, NJ, USA,IEEE, 13 mars 2005 (2005-03-13), pages 2393-2399, XP010791551 ISBN: 0-7803-8966-2
- RADHA H ET AL: "Scalable Internet video using MPEG-4" SIGNAL PROCESSING. IMAGE COMMUNICATION, ELSEVIER SCIENCE PUBLISHERS, AMSTERDAM, NL, vol. 15, no. 1-2, septembre 1999 (1999-09), pages 95-126, XP004180640 ISSN: 0923-5965

## Description

La présente invention concerne le traitement de flux de données scalables. Ces flux sont aussi appelés flux de données hiérarchiques, et sont destinés à être transmis sur un réseau de communication, à destination de terminaux, pour y être traités en temps réel.

Plus précisément, l'invention concerne un procédé d'adaptation d'un tel flux de données scalable aux caractéristiques d'un réseau et/ou des utilisateurs, en fonction de demandes de retransmission de certaines des données précédemment transmises aux terminaux.

L'invention s'applique notamment, mais non exclusivement, à l'adaptation d'un flux vidéo scalable, par exemple un flux MPEG4-SVC.

Dans un réseau de communication hétérogène (par exemple Internet), tous les utilisateurs ne disposent pas du même type d'accès aux données : la bande passante, les capacités de traitement, les écrans des différents utilisateurs peuvent être très différents (par exemple, sur un réseau Internet, un utilisateur dispose d'un débit ADSL à 1024 kb/s et d'un micro-ordinateur (PC) puissant alors qu'un autre bénéficie d'un accès modem et d'un PDA).

Une solution à ce problème consiste à générer plusieurs flux compressés correspondant à différents débits/résolutions de la séquence vidéo : c'est le simulcast. Cette solution est cependant sous-optimale en termes d'efficacité, et suppose de connaître à l'avance les caractéristiques de tous les utilisateurs potentiels.

Plus récemment sont apparus des algorithmes de codage vidéo dit scalables (ou échelonnables), c'est-à-dire à qualité adaptable et résolution spatio-temporelle variable, pour lesquels le codeur génère un flux compressé en plusieurs couches, chacune de ces couches étant emboîtée dans la couche de niveau supérieur. Ces algorithmes sont aujourd'hui en cours d'adoption en amendement de MPEG4-SVC (appelé dans la suite de ce document : SVC).

De tels codeurs sont très utiles pour toutes les applications pour lesquelles la génération d'un seul flux compressé, organisé en plusieurs couches de scalabilité, peut servir à plusieurs utilisateurs de caractéristiques différentes, par exemple :
- VOD ("Video On Demand" pour "vidéo à la carte"), accessibles aux terminaux de radiocommunication de type UMTS ("Universal Mobile Télécommunication Service" pour "service de télécommunication mobile universel"), aux PC ou aux terminaux de télévision avec accès ADSL, etc. ;
- mobilité de session (par exemple reprise sur un PDA d'une session vidéo commencée sur un téléviseur, ou, reprise sur un mobile GPRS ("General Packet Radio Service" pour "service général de radiocommunication par paquets") d'une session commencée sur UMTS) ;
- continuité de session (dans un contexte de partage de la bande passante avec une nouvelle application) ;
- télévision haute définition, dans laquelle un encodage vidéo unique doit permettre de servir aussi bien des clients disposant d'une définition standard SD que des clients disposant d'un terminal à haute définition HD ;
- visioconférence, dans laquelle un encodage unique doit répondre aux besoins de clients disposant d'un accès UMTS et d'un accès Internet.

La technique SVC est notamment présentée dans les documents :
- JSVM 2.0 : Joint Video Team (JVT) of ISO/IEC MPEG & ITU-T VCEG, N7084, Joint Scalable Video Model (JSVM) 2.0 Reference Encoding Algorithm Description, April 2005, Busan (Julien Reichel, Heiko Schwarz, Mathias Wien) ; et
- WD 2 : J. Reichel, H. Schwarz, M. Wien - Scalable Video Coding - Working Draft 2 -ISO/IEC JTC1/SC29/WG11, W7084, April 2005, Busan.

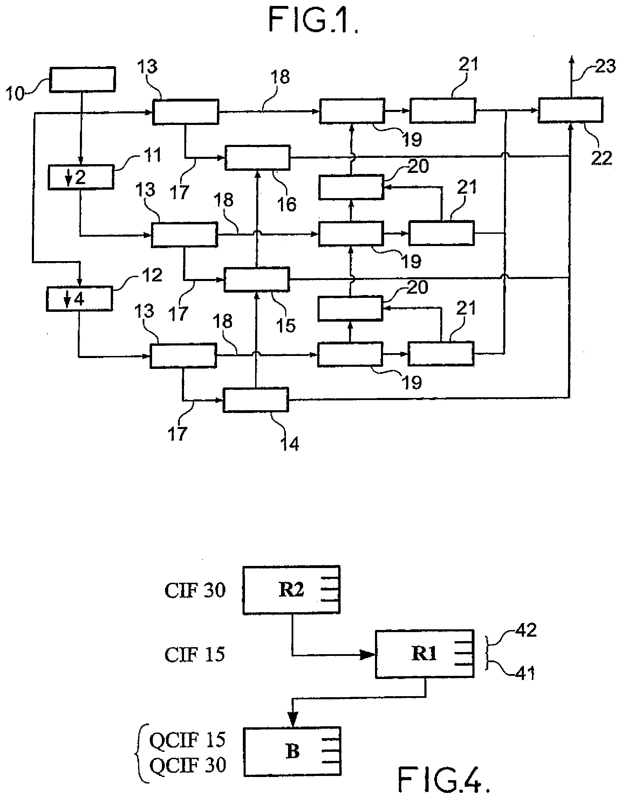

Le modèle JSVM MPEG, décrit dans le document JSVM 2.0 est basé sur un codeur scalable, de structure pyramidale, et est schématisé en figure 1. Les composantes d'entrée vidéo 10 subissent un sous-échantillonnage dyadique (décimation 2D par 2 référencée 11, décimation 2D par 4 référencée 12). Chacun des flux sous-échantillonnés subit ensuite une décomposition temporelle 13 de type MCTF ("Motion Compensated Temporal Filtering" pour "filtrage temporel compensé en mouvement"). Une version basse résolution de la séquence vidéo est codée 14 jusqu'à un débit donné qui correspond au débit maximum décodable pour la résolution spatiale basse.

Les couches supérieures sont ensuite codées 19 par soustraction de la couche précédente reconstruite et sur-échantillonnée et codage des résidus sous forme d'une couche de base, et éventuellement d'une ou plusieurs couches de rehaussement obtenues par codage multipasse de plans de bits (appelé FGS pour "Fine Grain Scalability", échelonnabilité à grain fin).

Selon cette approche, on distingue les informations de mouvement 17 et les informations de texture 18. Afin de réaliser une adaptation en débit, les informations de texture 18 sont codées à l'aide d'un schéma progressif :
- codage d'une première couche de qualité minimale (appelé « Base Layer » en anglais, ou Couche de Base) ;
- codage de couches de raffinement progressif (appelées « Enhancement Layers » en anglais, ou Couches de Réhaussement).

En référence à la figure 1, les informations de texture 18 alimentent un module de codage du niveau de base de quantification 19. Les données codées, en sortie du module 19 servent à alimenter un bloc 21 de transformation spatiale et de codage entropique, qui travaille sur les niveaux de raffinement du signal. Les données en sortie du module 21 alimentent une interpolation 20 depuis la couche de base. Cette interpolation est utilisée comme prédiction dans le module de codage 19 de la couche située au-dessus. Un module de multiplexage 22 ordonne les différents sous-flux générés dans un flux de données compressé global 23.

Le flux compressé 23, en sortie du codeur, est structuré en unités de données appelées « NALU » (pour « Network Abstraction Layer Unit » en anglais). Les NALUs sont organisées en blocs d'unités de données appelés par la suite « AU » (pour « Access Units » en anglais). Une AU comprend l'ensemble des NALUs correspondant à un même instant temporel de décodage, c'est-à-dire possédant un même DTS (pour « Decoding Time Stamp » en anglais, ou « information d'horodatage pour le décodage »), et appartenant donc à une même image. Chaque NALU est associée à une image issue de la décomposition spatio-temporelle, un niveau de résolution spatiale, et un niveau de quantification. Cette structuration en unités de données permet de réaliser une adaptation en débit et/ou résolution spatio-temporelle en supprimant les NALUs de résolution spatiale trop grande, ou de fréquence temporelle trop grande ou bien encore de qualité d'encodage trop grande.

Le codage SVC comprend la suppression des redondances dans le flux pour réduire la quantité d'information transmises aux utilisateurs. Si cette compression d'information importante est la raison du succès des services vidéos sur Internet, elle donne lieu en revanche à une grande sensibilité aux pertes d'information : en effet, la perte de certaines informations particulièrement importantes donnent lieu à des perturbations très sévères. Il est donc nécessaire de détecter les pertes et de faire procéder à la retransmission des informations les plus importantes.

Le document FR2854018 décrit une technique de contrôle d'un flux de données comprenant N sous-flux associés chacun à un niveau de priorité. Chacun des paquets est marqué avec le niveau de priorité associé au sous-flux auquel il appartient. Le principe général de cette technique consiste à mettre en œuvre un mécanisme de seau à jetons multi-niveau (MLTB, pour « Multi Layer Token Bucket »). Chaque niveau du MLTB est utilisé pour traiter l'un des N niveaux de priorité. Chacun des paquets subit un traitement selon un marquage correspondant à son niveau de priorité : il est accepté ou refusé selon qu'il est possible ou non de lui attribuer des jetons en fonction de son niveau de priorité. Les paquets acceptés sont placés dans une mémoire tampon (buffer) de paquets à émettre, qui forme un moyen de gestion d'une file d'attente. Les paquets refusés sont jetés ou, dans une variante de réalisation, placés dans le buffer après avoir été à nouveau marqués avec un niveau de priorité plus faible (c'est-à-dire après avoir été reclassés dans un niveau de priorité plus faible).

Un inconvénient de cette technique est qu'elle ne traite pas le problème des demandes de retransmissions de paquets.

Suivant les cas, lorsque des pertes dans les données transmises sont détectées et signalées par un terminal, par exemple le terminal utilisateur d'un utilisateur ou encore un équipement intermédiaire dans le réseau, soit les données perdues sont retransmises, ce qui exige un débit supplémentaire de transmission, soit le codage effectué par le codeur est modifié à la volée pour adapter les données transmises à celles qui ont été réellement reçues.

On connaît le document US 6 877 038, selon lequel un paquet perdu est retransmis en fonction du résultat de la comparaison d'un niveau de priorité attribué audit paquet à un seuil de décision de retransmission adapté dynamiquement en fonction des caractéristiques (par exemple en fonction du débit disponible) du réseau. Une telle technique nécessite la définition d'un seuil arbitraire. Par ailleurs, la décision de ne pas retransmettre certains paquets conformément à cette technique peut donner lieu à des saccades lors du décodage des données.

Le document EP1781035 décrit un système de transmission vidéo scalable intégrant un mécanisme de régulation pour la transmission/retransmission des données.

Suivant un premier aspect, l'invention propose un procédé d'adaptation d'un flux de données scalable (2) comprenant des premières unités de données (O_Data) et définissant une pluralité de niveaux de qualité et de débit selon le nombre et le type d'unités de données utilisées, les types d'unités utilisés comprenant au moins les premières unités de données et des deuxièmes unités de données correspondant à des données signalées comme étant à retransmettre, le procédé d'adaptation dudit flux de données scalable (2) étant réalisé en fonction des deuxièmes unités de données (R_Data), selon lequel chaque unité de données parmi les premières et deuxièmes unités de données à transmettre est initialement classée dans un niveau initial respectif (N1, N2, N3, N4) parmi la pluralité de niveaux, et selon lequel, pour une deuxième unité considérée classée dans un niveau initial, lorsqu'une ressource en débit disponible pour ledit niveau n'est pas suffisante pour transmettre ladite deuxième unité dans le flux de données, on met en oeuvre un mécanisme de régulation relativement à la deuxième unité, selon lequel: on compare entre elles des unités de données comprenant au moins une première unité et classées dans le niveau initial de la deuxième unité considérée, on sélectionne au moins une desdites unités de données en fonction d'au moins un critère de sélection déterminé et on reclasse ladite unité de données sélectionnée dans un niveau moins prioritaire que ledit niveau initial de la deuxième unité considérée.

Un procédé selon l'invention consiste donc à adapter, de façon dynamique, le classement d'unités de données à transmettre ou à retransmettre pour respecter une consigne de débit donnée et permettre les retransmissions d'unités de données, en vue d'obtenir un flux régulé qui permette aux terminaux recevant ce flux régulé, de restituer un flux de bonne qualité en exploitant au mieux le débit alloué

Les classes correspondent à des niveaux de qualité distincts.

Dans une classe, les données à retransmettre importantes pour le décodage d'autres données seront bien retransmises préférentiellement à la transmission d'autres données, considérées moins importantes. Dans la plupart des cas, les données transmises pourront être décodées par les terminaux des utilisateurs (et ne seront donc pas inexploitables du fait de la perte de données précédemment transmises), ce qui est une des clefs de l'intégrité d'un flux reçu par un terminal.

En outre, les étapes réalisées ci-dessus en considérant une unité de données à retransmettre contribuent à ce que chaque niveau de flux transmis correspondant à une classe soit constitué de manière à permettre la meilleure qualité de restitution au vu du débit disponible, ce qui est une autre des clefs de l'intégrité d'un flux reçu par un terminal.

Il n'est nullement besoin de définir des seuils arbitraires pour décider de retransmettre ou non des paquets.

Dans un mode de réalisation, lorsqu'une ressource en débit disponible pour la classe initiale d'une première unité considérée n'est pas suffisante pour transmettre ladite première unité, on met également en œuvre le mécanisme de régulation relativement à ladite première unité. Ainsi un même mécanisme de régulation est appliqué tant aux premières unités de données qu'aux deuxièmes unités de données, ce qui rationalise la mise en œuvre d'un procédé selon l'invention et contribue à garantir l'intégrité du flux reçu par un terminal.

Dans un mode de réalisation, l'ordre de transmission des premières et deuxièmes unités de données dans le flux de données adapté est déterminé en fonction d'informations d'horodatage pour le décodage associées aux unités de données. Cette disposition permet de garantir que les unités de données à retransmettre, qui sont les plus urgentes, seront bien retransmises avant que ne soient transmises d'autres unités de données moins urgentes pour le terminal.

Dans un mode de réalisation, au moins une des classes est une classe de non retransmission telle que les unités de données qui y sont classées ne sont pas transmises. Ce niveau de régulation considéré dans le mécanisme de régulation est un niveau fictif formant poubelle. Il n'est associé à aucun débit de transmission et est affecté aux unités de données qui ont été considérées comme les moins importantes pour garantir l'intégrité du flux transmis au vu de la consigne de débit indiquée pour la transmission et des autres unités de données courantes à transmettre ou retransmettre. De plus, ce niveau fictif ne garde pas la mémoire des données qui y sont reclassées. Elles sont définitivement perdues.

Dans un mode de réalisation, des classes correspondent à des niveaux de qualité respectifs associés à des débits respectifs non nuls. Les unités de données transmises dans des classes respectives permettent de définir des niveaux de qualité et de débit respectifs.

Dans un mode de réalisation, lorsqu'une deuxième unité de données est classée dans la classe de non retransmission, on actualise une information, associée à un groupe d'unités de données précédemment transmises comprenant ladite deuxième unité de données et représentative d'un niveau de qualité du groupe tel qu'effectivement transmis. Et pour une deuxième unité de données du groupe ultérieurement indiquée comme étant à retransmettre, la retransmission de cette deuxième unité est effectuée en fonction au moins d'une comparaison entre l'information actualisée associée au groupe et une information de marquage portée par ladite unité de données et indiquant un niveau de qualité.

Cette disposition permet de garder en mémoire un niveau de qualité global pour des unités de données précédemment transmises et d'effectuer les seules retransmissions qui seront effectivement exploitables au vu des retransmissions requises et non effectuées. Cette disposition contribue donc à optimiser la qualité du flux transmis tout en économisant la ressource de débit.

Dans un mode de réalisation, un groupe comprend les unités de données associées à la même information d'horodatage. Un groupe est par exemple un AU.

Dans un mode de réalisation, lorsque la ressource en débit disponible pour la classe n'est pas suffisante pour transmettre la deuxième unité considérée classée dans la classe initiale, les unités de données comparées en vue de la sélection lors de la mise en œuvre du mécanisme de régulation sont des premières unités classées dans la classe initiale de la deuxième unité considérée. Un tel mécanisme de régulation favorise les retransmissions au vu des transmissions initiales.

Dans un mode de réalisation, lorsque la ressource en débit disponible pour la classe initiale n'est pas suffisante pour transmettre la deuxième unité considérée classée dans la classe initiale, les unités de données comparées en vue de la sélection lors de la mise en œuvre du mécanisme de régulation sont des premières et deuxièmes unités classées dans la classe initiale de la deuxième unité considérée. Un tel mécanisme de régulation permet de comparer entre elles les premières unités et les deuxièmes unités sur le plan de leur apport respectif quant à la qualité du flux et réalise un lissage dans le temps de la qualité du flux transmis.

Dans un mode de réalisation, l'étape de sélection d'une unité de données et/ou le classement d'une unité de données dans une classe initiale est effectué(e) au moins en fonction d'une information de marquage portée par l'unité de données et indiquant un niveau de qualité.

Une telle disposition relative à l'étape de sélection fournit un exemple de critère de sélection avantageux, puisqu'il permet de sélectionner une unité de données la moins importante dans la classe au vu de son apport quant à la qualité du flux transmis. Une telle disposition relative au classement permet notamment de définir des niveaux de régulation distincts pour la transmission et donc un flux adapté scalable.

Par exemple, le flux de données étant un flux vidéo, l'étape de sélection d'une unité de données et /ou le classement initial d'une unité de données est effectué(e) au moins en fonction d'au moins une information de marquage portée par ladite unité de données et indiquant un ou plusieurs indicateurs parmi un indicateur de priorité, un indicateur de dépendance relatif à une résolution spatiale, un indicateur de résolution temporelle et un indicateur de qualité et/ou de complexité.

Dans un mode de réalisation, le mécanisme de régulation, mis en œuvre si la ressource de débit disponible pour la classe initiale de la deuxième unité de données considérée n'est pas suffisante, comprend les étapes suivantes :
a) on choisit comme classe courante la classe initiale de ladite deuxième unité ;
b) si la ressource de débit pour la classe courante n'est pas dépassée, la classe courante est considérée comme régulée et on passe à l'étape c) ; sinon on sélectionne au moins une unité de données à reclasser parmi des unités de données classées dans la classe courante en fonction d'au moins le critère de sélection déterminé, on reclasse ladite au moins une unité de données sélectionnée dans une classe de moins prioritaire que la classe courante, et on réitère l'étape b) ;
c) si la classe courante n'est pas la moins prioritaire parmi ladite pluralité de classes, on choisit une nouvelle classe courante moins prioritaire que la précédente classe courante puis on revient à l'étape b), sinon ladite régulation est terminée.

Un tel mécanisme de régulation permet de réaliser, lors de l'indication d'une nouvelle unité de donnée à retransmettre, une régulation au vu d'unités de données courantes à transmettre et/ou retransmettre, en comparant leur importance respective au vu de leur apport respectif à la qualité du flux au vu de la qualité couramment transmise.

Dans un mode de réalisation, on contraint le débit de transmission du flux de données adapté par le mécanisme de régulation à être égal à une deuxième valeur fixée. On contraint en outre le débit de traitement des premières unités du flux de données à être égal à une première valeur fixée. Ce traitement comprend l'affectation d'une portion de la deuxième valeur de débit fixée pour le niveau initial d'une première unité considérée si cette portion de débit est disponible pour ledit niveau initial. Sinon ce traitement comprend la mise en œuvre du mécanisme de régulation relativement à la première unité. Une telle disposition permet d'assurer une transmission fluide des premières unités de données importantes du flux, en dépit de la prise en compte des deuxièmes unités de données à retransmettre. Ainsi, par exemple, dans le cas d'un flux SVC, en cas d'un nombre important de retransmissions à effectuer, les données relatives à des images successives continueront à être transmises à un rythme soutenu avec un nombre réduit de NALUs par image, et donc avec un niveau de qualité réduit.

Suivant un deuxième aspect, l'invention propose un programme d'ordinateur comprenant des instructions pour l'exécution des étapes d'un procédé suivant le premier aspect de l'invention lorsque le programme est exécuté sur un ordinateur.

Suivant un troisième aspect, l'invention propose un dispositif de retransmission adapté pour recevoir un flux de données scalable comprenant des premières unités de données et définissant une pluralité de niveaux de qualité et de débit selon le nombre et le type d'unités de données utilisées, ledit dispositif de retransmission étant adapté pour recevoir des demandes de retransmission de deuxièmes unités de données et pour mettre en œuvre un procédé suivant le premier aspect de l'invention pour retransmettre des deuxièmes unités de données.

Suivant un quatrième aspect, l'invention propose un serveur de diffusion adapté pour transmettre un flux de données scalable comprenant des premières unités de données et définissant une pluralité de niveaux de qualité et de débit selon le nombre et le type d'unités de données utilisées, le serveur de diffusion étant adapté pour recevoir des demandes de retransmission de deuxièmes unités de données et pour mettre en œuvre un procédé suivant le premier aspect de l'invention pour retransmettre des deuxièmes unités de données et transmettre le flux de données scalable adapté.

Suivant un cinquième aspect, l'invention propose un flux de données scalable obtenu suite à la mise en œuvre d'un procédé d'adaptation, suivant le premier aspect de l'invention, d'un flux de données scalable d'origine, comprenant des premières unités de données et définissant une pluralité de niveaux de qualité et de débit selon le nombre et le type d'unités de données utilisées, en fonction de deuxièmes unités de données correspondant à des données précédemment transmises dans le flux et signalées comme étant à retransmettre.

D'autres caractéristiques et avantages de modes de réalisation de l'invention apparaîtront à la lecture de la description suivante d'un mode de réalisation de l'invention, donné à titre d'exemple indicatif et non limitatif, et des dessins annexés, dans lesquels :
- la figure 1, déjà décrite en relation avec l'art antérieur, présente un synoptique d'un encodeur générant un flux vidéo scalable MPEG4-SVC ;
- la figure 2 présente un synoptique d'un dispositif d'adaptation de flux de données scalable selon un mode de réalisation de l'invention ;
- la figure 3 présente les trois axes de scalabilité d'un flux MPEG4-svc ;
- la figure 4 présente un exemple de dépendances entre des entités de données de différentes couches de codage ;
- la figure 5 présente une vue plus détaillée du module de régulation apparaissant sur la figure 2 ;
- la figure 6 illustre une structure de données à double référencement, entre le buffer de régulation et le MLTB, selon un mode de réalisation particulier de l'invention ;
- les figures 7 et 8 présentent un organigramme d'un mode de réalisation particulier d'un algorithme de régulation mis en œuvre par le module de régulation apparaissant sur la figure 2 (la figure 8 détaille l'étape 149 de la figure 7) ; et
- la figure 9 présente un exemple de répartition des unités de données dans différents niveaux de régulation ;
- les figures 10.a, 10.b et 10.c illustrent 3 modes de fonctionnement du dispositif d'adaptation de flux de données et d'un terminal utilisateur ;
- les figures 11 et 12 illustrent des modes de réalisations de la régulation en présence de retransmissions.

Sur toutes les figures du présent document, les éléments et étapes identiques sont désignés par une même référence numérique.

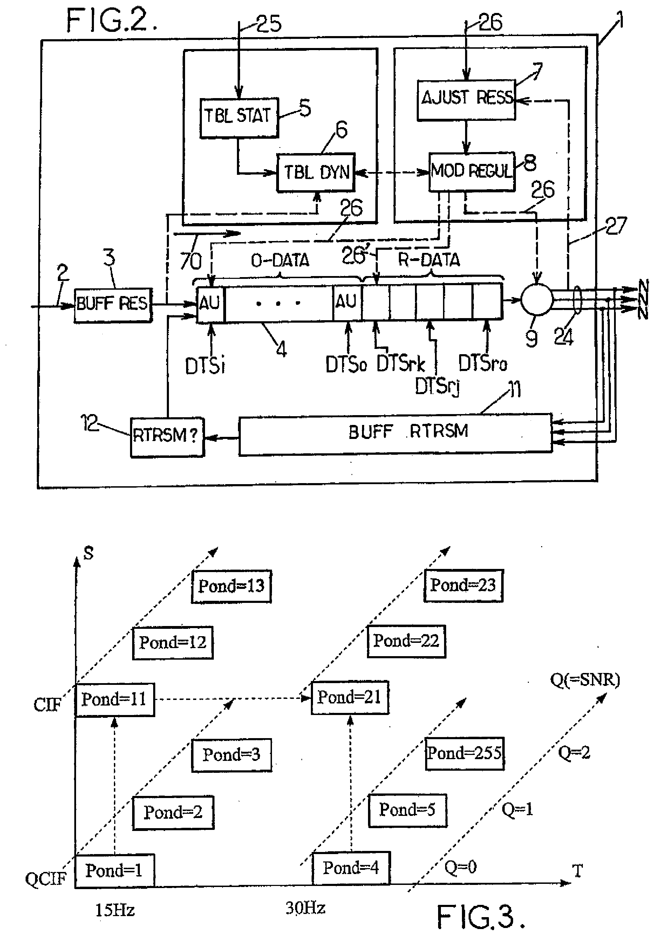

Comme illustré sur la figure 2, dans un mode de réalisation de l'invention, un dispositif 1 d'adaptation de flux de données scalable comprend les éléments suivants :
- une mémoire tampon de réserve 3 (appelée ci-après buffer de réserve), qui reçoit un flux MPEG4-SVC 2, destiné à fournir des unités de données à transmettre ;
- une mémoire tampon de régulation 4 (appelée ci-après buffer de régulation), dont l'entrée est reliée à la sortie du buffer de réserve 3 et à la sortie d'un module de décision 12 destiné à fournir des unités de données à retransmettre ;
- une table de classement statique 5 ;
- une table de classement dynamique 6 ;
- un module d'ajustement des ressources 7 ;
- un module de régulation 8, mettant en œuvre un processus de régulation permettant de garantir le(s) débit(s) demandé(s) (flèches référencées 26, 26') pour le(s) niveau(x) de régulation : par exemple, le niveau inférieur est le niveau N1, de priorité maximale, le niveau N2, de priorité inférieure au niveau N1 et le niveau N3, de priorité inférieure au niveau N2 ; on considère en outre dans le mode de réalisation considéré un niveau fictif N4 formant poubelle, de priorité minimale ;
- un module d'aiguillage 9, permettant d'aiguiller chacune des unités de données présentes en sortie du buffer de régulation 4 en fonction du niveau de régulation dans lequel le module de régulation 8 l'a classée, pour transmission sur le réseau : les unités de données sont ainsi orientées vers le niveau qui leur a été attribuées par la régulation ;
- une mémoire tampon de retransmission 11 (ci-après appelée buffer de retransmission) alimentée en fonction des unités de données présentes en sortie du module d'aiguillage 9 ;
- un module de décision 12, dont l'entrée est reliée à la sortie du buffer de retransmission 11, destiné à fournir ou non une unité de données à retransmettre au buffer de régulation 4.

Le mode de réalisation considéré en référence aux figures décrit un flux MPEG4-SVC. D'autres types de flux peuvent bien sûr être adaptés avec un procédé selon l'invention.

Dans un exemple de réalisation, au moins certains des moyens précités 3 à 12 compris dans le dispositif d'adaptation 1 sont des moyens logiciels, résultant de l'exécution d'un programme d'ordinateur par une unité de traitement. Le dispositif 1 comprend alors une mémoire non volatile stockant un programme d'ordinateur mettant en œuvre le procédé d'adaptation de flux selon l'invention, et une unité de traitement (microprocesseur par exemple) pilotée par ce programme d'ordinateur.

On nomme unités de données les données considérées dans le dispositif 1. Certaines de ces unités de données sont les NALUs présentes dans le flux 2 reçu par le dispositif de données 1. D'autres de ces unités de données comportent des données précédemment transmises signalées comme étant à retransmettre dans des demandes de retransmission. Ces dernières unités de données sont des NALUs, des fragments de NALUs et/ou des paquets (IP) de transport sur le réseau comportant plusieurs NALUs ou des fragments de NALUS.

Les tables de classement 5 et 6 permettent notamment de faire des correspondances entre des unités de données du flux 2 et des pondérations et des niveaux de régulation respectifs, en fonction d'informations indiquées par les unités de données.

Dans le cas du MPEG4-SVC, des informations indiquées par les unités de données comprennent certains au moins des indicateurs du quadruplet {P, D, T, Q} où :
- P indique la priorité ;
- D indique la dépendance (sur-ensemble de la résolution spatiale S) ;
- T indique la résolution temporelle ; et
- Q indique la qualité et/ou la complexité.

Lorsque l'unité de donnée considérée est une NALU, ces indicateurs figurent dans l'entête de chaque NALU.

Lorsque l'unité de données considérée est un fragment de NALU, elle est associée aux mêmes indicateurs P, D, T, Q que la NALU dont elle est extraite. Par ailleurs, elle est également associée aux mêmes caractéristiques DTS que la NALU dont elle est extraite.

Lorsque l'unité de données considérée est un paquet comprenant plusieurs NALUs, les indicateurs P, D, T, Q de la NALU la plus prioritaire contenue dans le paquet (NALU correspondant par exemple à une pondération la plus faible dans le niveau de transmission le plus prioritaire) sont associées au paquet. L'unité de données est par ailleurs associée aux mêmes caractéristiques DTS que la NALU qu'elle comporte devant être lue le plus tôt.

Le classement des unités de données dans les niveaux de régulation est donc réalisé à partir des propriétés de scalabilité d'un flux MPEG4-SVC.

Comme illustré sur la figure 3, un flux MPEG4-SVC, tel que le flux 2, présente trois axes de scalabilité possibles : axe spatial S (résolution de l'image), axe fréquentiel T (fréquence des images) et axe Q, aussi appelé axe SNR (qualité), traduisant le niveau de détail obtenu par la troncature des coefficients issus du codage. Chaque NALU est représentée par un cadre.

La figure 4 présente un exemple de dépendances entre des NALUs de différentes couches de codage du flux 2. Dans cet exemple, on suppose que :
- le codage de base B est associé aux codages QCIF15 et QCIF30 ;
- le premier niveau de réhaussement R1 est associé au codage CIF15 ; et
- le second niveau de réhaussement R2 est associé au codage CIF30.

Chaque couche de codage comprend, pour une résolution spatiale/temporelle donnée (par exemple CIF/15Hz), des NALUs de différentes qualités SNR. On peut donc dire que chaque couche de codage comprend une pluralité de niveaux SNR. En d'autres termes, une couche de codage correspond à une gamme de débits qu'il est possible d'ajuster en prenant plus ou moins de NALUs ayant différentes SNR.

La figure 4 montre les dépendances entre NALUs pour accéder à un niveau précis de qualité. Dans cet exemple, la couche de codage CIF30 s'appuie sur la couche de codage CIF15, qui lui-même s'appuie sur la couche de codage QCIF15 ou QCIF30.

Dans certains cas, tous les niveaux SNR d'une couche de codage ne sont pas systématiquement utilisés par les couches de codage de qualité supérieure. Par exemple, sur la figure 4, parmi les niveaux SNR du niveau de codage CIF15 : ceux qui sont utilisés par le niveau de codage CIF30 sont référencés 41 et ceux qui ne le sont pas sont référencés 42.

Dans les exemples de tables statique et dynamique présentés ci-dessous, les unités de données non nécessaires pour les niveaux de régulation supérieurs sont identifiées par une pondération élevée (valeur 255). Quand un besoin de reclassement apparaît, cette valeur élevée a pour effet de favoriser leur rejet (reclassement dans un niveau fictif N4 formant poubelle) ou leur reclassement dans un niveau de régulation moins prioritaire.

Il est à noter que, dans le mode de réalisation de la présente invention, les tables de classement statique 5 et dynamique 6 correspondent à un mode de repli donné parmi plusieurs modes de repli possibles (cf. demande de brevet n° FR0507690). Un mode de repli donnée correspond à une table statique donnée.

L'exemple de table statique ci-dessous accorde la priorité à la fluidité des images (QCIF15 et QCIF30 en premier niveau de régulation) sur la résolution de l'affichage (CIF15 en deuxième niveau). Un autre mode de repli permettrait d'accorder la priorité à la résolution de l'affichage (QCIF15 et CIF15 en premier niveau et QCIF30 en deuxième niveau). Dans l'exemple de table statique ci-dessous, la présence simultanée du QCIF30 et du QCIF15 dans le premier niveau de régulation est justifiée par leur nécessité pour décoder le CIF30.

La table de classement dynamique 6 mémorise les opérations de filtrage réalisées par l'adaptation afin de classifier les nouveaux NALUs entrants dans un niveau de régulation tel que ces NALUS pourront effectivement être décodés. Dans le mode de réalisation considéré, sur l'arrivée d'une nouvelle image de référence du flux 2 dans le buffer de régulation 4, la table dynamique 6 est réinitialisée avec les valeurs indiquées dans la table statique 5. Eventuellement, en cas de modification des consignes de débit appliquées à l'adaptation, une nouvelle table de classement statique est fournie, qui sera prise en compte sur l'arrivée de la prochaine image de référence.

La table de classement statique 5 permet de faire correspondre une unité de données, associée à un quadruplet {P, D, T, Q} particulier, à une information « niveau de régulation » initial et à une information « pondération ».

La table de classement dynamique 6 permet de faire correspondre une unité de données, associée à un quadruplet {P, D, T, Q} particulier, à une information « niveau de régulation » courant affecté par le module de régulation. L'unité de données sera transmise sur le réseau dans le niveau de régulation correspondant au niveau de régulation alors renseigné dans la table de classement dynamique 6, si ce niveau de régulation est N1 ou N2 ou N3. Si le niveau de régulation est N4 (niveau fictif formant poubelle), alors l'unité de données ne sera pas transmise.

L'information « pondération» permet de pouvoir ordonner les unités de données au sein d'un même niveau de régulation. Dans un cas particulier de réalisation, cette information de pondération est égale à la valeur P de l'entête NALU. Dans un autre cas particulier, la pondération est égale à la valeur DTQ, nombre correspondant à la somme de Q unités, T dizaines et D centaines.

La table de classement statique 5, dite de référence, est fournie avec des métadonnées 25 comprises dans les données d'accompagnement du contenu audiovisuel. Elle contient les niveaux de régulation initiaux affectés aux unités de données et généralement définis par le fournisseur du contenu. Par exemple en référence à la figure 4, le premier niveau de régulation N1 est associé aux codages QCIF15 et QCIF30 (niveau de base B), le deuxième niveau de régulation N2 est associé au codage CIF15 (premier niveau de réhaussement R1) et le troisième niveau de régulation N3 (second niveau de réhaussement R2) est associé au codage CIF30.

La table de classement dynamique 6 a pour but de prendre en compte les reclassements d'unités de données effectués au cours des opérations de régulation et les dépendances entre les unités de données. Son objectif est de maintenir la cohérence du flux. Lors du reclassement d'une unité de données dépendant de l'image de référence ayant donné lieu à la réinitialisation de la table dynamique, la table de classement dynamique 6 est mise à jour pour actualiser la valeur indiquée pour le niveau de régulation de l'unité de données considérée et pour vérifier que les unités de données dont le décodage dépend de cette unité de données ne sont pas placées dans un niveau inférieur au niveau de reclassement de cette unité de données. Sinon les unités de données dont le décodage dépend de cette unité de données sont également reclassées au niveau de reclassement de cette unité de données ou dans un niveau supérieur.

La table suivante présente un exemple de table de classement statique 5 pour une régulation à trois niveaux de régulation effectifs N1, N2 et N3. La colonne « Cible » présente à titre informatif une possibilité de caractéristique de flux (couche de codage).

| Cible | P | D | T | Q | Niveau | Pondération |
|---|---|---|---|---|---|---|
| QCIF 15Hz | 0 | 0 | 0 | 0 | N1 | 1 |
| | 1 | 0 | 0 | 1 | N1 | 2 |
| | 2 | 0 | 0 | 2 | N1 | 3 |
| QCIF 30Hz | 0 | 0 | 1 | 0 | N1 | 4 |
| | 2 | 0 | 1 | 1 | N1 | 5 |
| | 3 | 0 | 1 | 2 | N1 | 255 |
| CIF 15Hz | 0 | 1 | 0 | 0 | N2 | 11 |
| | 3 | 1 | 0 | 1 | N2 | 12 |
| | 4 | 1 | 0 | 2 | N2 | 13 |
| CIF 30Hz | 0 | 1 | 1 | 0 | N3 | 21 |
| | 4 | 1 | 1 | 1 | N3 | 22 |
| | 5 | 1 | 1 | 2 | N3 | 30 |

La table suivante présente un exemple un exemple de table de classement dynamique 6 selon l'invention, obtenue par mise à jour de l'exemple de table statique 5 ci-dessus après application du mécanisme de régulation par le module de régulation 8. On observe dans cet exemple que cette mise à jour porte sur deux types d'unités de données :
- les unités de données ayant un PDTQ {3,0,1,2} (sixième ligne de la table statique 5) devront être reclassées dans un niveau N4 de régulation qui est un niveau fictif formant poubelle considéré lors de l'opération de régulation (dernière ligne de la table dynamique 6) ; et
- les unités de données ayant un PDTQ {2,0,1,1} (cinquième ligne de la table statique 5) devront être reclassées dans le niveau N2 de régulation (cinquième ligne de la table dynamique 6).

| P | D | T | Q | Niveau | Pondération |
|---|---|---|---|---|---|
| 0 | 0 | 0 | 0 | N1 | 1 |
| 1 | 0 | 0 | 1 | N1 | 2 |
| 2 | 0 | 0 | 2 | N1 | 3 |
| 0 | 0 | 1 | 0 | N1 | 4 |
| 2 | 0 | 1 | 1 | N2 | 5 |
| 0 | 1 | 0 | 0 | N2 | 11 |
| 3 | 1 | 0 | 1 | N2 | 12 |
| 4 | 1 | 0 | 2 | N2 | 13 |
| 0 | 1 | 1 | 0 | N3 | 21 |
| 4 | 1 | 1 | 1 | N3 | 22 |
| 5 | 1 | 1 | 2 | N3 | 30 |
| 3 | 0 | 1 | 2 | N4 | 255 |

Les unités de données sont extraites du buffer de régulation 4 à débit constant, en commençant par les unités de données associées aux DTS les plus anciens. Toutes les unités de données présentes dans le buffer de régulation 4 et ayant le même DTS doivent être transmises au même moment. Les unités de données sont donc transmises AU par AU.

Le module d'aiguillage 9 aiguille chacune des unités de données en fonction du niveau de régulation courant dans lequel le module de régulation 8 l'a classée et génère ainsi plusieurs sous-flux 24 correspondant chacun à l'un des niveaux de régulation effectifs N1 à N3.

Dans un mode de réalisation, chaque niveau de régulation correspond à un moyen de transmission différent, afin de séparer les niveaux. Chaque unité de données est alors aiguillée vers le moyen de transmission correspondant au niveau de régulation dans lequel elle est classée. Cette différenciation peut se faire au niveau des adresses IP/port, marquage TOS, piste au sein d'un multiplexage... Dans une variante, il existe également plusieurs moyens de transmission et plusieurs niveaux de régulation sont associés à un même moyen de transmission. Dans encore une autre variante, il existe un unique moyen de transmission auquel sont associés tous les niveaux de régulation.

Préalablement à leur transmission, les unités de données à transmettre sont encapsulées dans des paquets conformes au protocole de transport utilisé.

Suivant les cas, plusieurs NALUs peuvent être comprises dans le même paquet ou une seule NALU peut être séparée en plusieurs fragments disposés dans des paquets respectifs.

Toujours en référence à la figure 2, le buffer de régulation 4 contient d'une part les données à transmettre, désignées globalement par le terme O_Data, provenant directement du flux 2 via le buffer de réserve 3. Ces données O_Data sont stockées par exemple dans une file FIFO, dont la flèche référencée 70 indique le sens.

Le buffer de régulation 4 contient d'autre part, lorsque des retransmissions sont à effectuer, les unités de données à retransmettre, désignées globalement par le terme R_Data et provenant du module de décision 12.

En vue de respecter une consigne de débit associée à chaque niveau de régulation, la taille du buffer de régulation 4 est fixe tout au long du processus.

Pour les unités de données O_Data contenues dans le buffer de régulation 4, on nomme DTSi la valeur DTS de la dernière AU des unités de données O_Data entrée dans le buffer de régulation 4, et DTSo la valeur DTS de la première AU des unités de données O_Data à sortir du buffer de régulation 4.

Les AUs des unités de données O_Data sont délivrées au buffer de régulation 4 suivant un rythme d'AU constant, cadencé par exemple par un temporisateur disposé entre le buffer de réserve 3 et le buffer de régulation 4. En d'autres termes, dans un fonctionnement sans retransmission et quand le buffer de régulation est normalement rempli, les unités de données O_Data contiennent un nombre constant d'images, égal à DTSi - DTS₀. L'entrée dans le buffer de régulation 4 d'une nouvelle unité de donnée provenant du module de décision 12 s'effectue en fonction des décisions prises par le module de décision 12.

Lorsque k+1 (k entier positif) unités de données R_Data sont contenues dans le buffer de régulation 4, on nomme DTSrj, avec j=0 à k, la valeur DTS des unités de données R_Data entrée dans le buffer de régulation 4.

Le buffer de régulation 4 est adapté pour transmettre au module d'aiguillage 9 les unités de données par AU.

Le buffer de régulation 4 étant adapté pour transmettre en priorité au module d'aiguillage 9 les unités de données par ordre croissant de DTS , les données à retransmettre présentes dans le buffer de régulation 4 seront donc transmises en priorité.

Le buffer de réserve 3 permet le regroupement des NALUs du flux 2 pour former les AU.

Ce buffer de réserve 3 permet également de traiter les problèmes de suralimentation et de sous-alimentation du buffer de régulation 4.

Le buffer de retransmission 11 contient les données susceptibles d'être retransmises. Il est alimenté par une copie des données O_Data émises dans les sous flux 24.

Selon les cas, les données alimentant le buffer de retransmission 11 prennent la forme d'unités de données qui peuvent être des NALUs, des paquets comprenant plusieurs NALUs ou des paquets comprenant un ou des fragments de NALU.

Comme indiqué précédemment, ces unités de données stockées dans le buffer de retransmission 11 sont associées à des indicateurs P, D, T, Q et DTS fonction des NALUs dont elles sont extraites ou qu'elles comportent.

Le fait de réaliser la régulation sur les données à retransmettre sous la forme de fragments de NALUs ou de paquets permet de retransmettre uniquement les données utiles au terminal, sans avoir systématiquement à retransmettre la totalité d'un NALU de grande taille fragmenté sur plusieurs paquets.

Dans un mode de réalisation, le buffer de retransmission 11 comprend une table de hachage, permettant de faire correspondre une unité de données stockée dans le buffer de retransmission 11 et un identifiant de cette unité de données. Lorsque l'unité de données considérée est un paquet, l'identifiant est par exemple un couple du type (numéro de séquence SN du paquet ; niveau de régulation du paquet utilisé pour la transmission), ce qui permet d'identifier des paquets même lorsque plusieurs moyens de transport, et donc plusieurs sessions, sont utilisés.

On notera qu'une unité de données pour laquelle une demande de retransmission a été effectuée n'est pas immédiatement supprimée du buffer de retransmission 11. En effet, une même unité de données est susceptible de devoir être retransmise plusieurs fois. Une unité de données est supprimée du buffer de retransmission 11 lorsque la retransmission devient inutile parce que le client est supposé avoir décodé l'unité de données ou parce que l'unité de données est estimée périmée.

Lorsqu'une unité de donnée doit être retransmise (par exemple suite à l'envoi, par un terminal à destination duquel un ou plusieurs sous-flux est transmis, d'un message indiquant la non-réception de l'unité de données et indiquant l'identifiant de l'unité de données à retransmettre), une copie de l'unité de données est extraite du buffer de retransmission 11 à l'aide de l'identifiant, et est transmise au module de décision 12.

Le module de décision 12 détermine alors s'il convient ou non de retransmettre cette unité de données non reçue par le terminal. Différents critères de décision peuvent être appliqués, relatifs à la qualité du flux transmis et/ou au fait que l'unité de données à retransmettre est estimée périmée ou non etc.

Dans le cas positif, le module de décision 12 fournit la donnée au buffer de régulation 4.

Lorsqu'il est décidé par le module de décision 12 de ne pas fournir au buffer de régulation l'unité de données à retransmettre, les unités de données présentes dans le buffer de régulation 4 et qui dépendent de cette unité de données sont déterminées et seront également non transmises (reclassement au niveau poubelle N4).

Le module de régulation 8 reçoit en entrée les références des unités de données contenues dans le buffer de régulation 4. Il régule les unités de données considérées entre les niveaux N1 à N4 (N4 étant le niveau fictif formant poubelle) afin de garantir les consignes de débit pour les différents niveaux de régulation N1 à N3.

Lors d'un reclassement par le module de régulation 8 d'une unité de données considérée d'un niveau Ni à Ni+k, les unités de données dont le décodage dépend de l'unité de données considérée sont également reclassées au moins à ce niveau Ni+k. Le module de régulation 8 met à jour la table de classement dynamique 6 lorsqu'un reclassement concerne une unité de données dépendant de la dernière image de référence entrée dans le buffer de régulation 4.

Un ajustement des ressources disponibles est effectué, en fonction des débits ciblés et d'informations (flèche référencée 27 sur la figure 2) sur les unités de données transmises, par le module d'ajustement des ressources 7.

Seules les unités de données présentes dans le buffer de régulation 4 sont gérées dans le module de régulation 8.

Dans un mode de réalisation, le module de régulation 8 met par exemple en œuvre un mécanisme de régulation basé sur un algorithme de type seau à jetons multi-niveau (appelé MLTB par la suite).

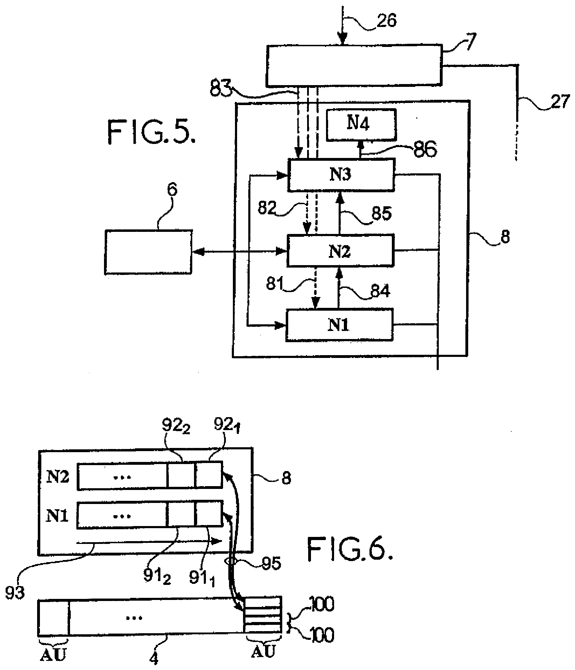

Dans l'exemple de la figure 5, le MLTB gère les trois niveaux de régulation N1, N2, N3 et le niveau fictif N4. Les flèches référencées 81, 82 et 83 symbolisent les ressources de débit affectées à chacun des niveaux de régulation N1, N2 et N3. La flèche référencée 84 symbolise la régulation entre les niveaux N1 et N2. La flèche référencée 85 symbolise la régulation entre les niveaux N2 et N3. La flèche référencée 86 symbolise la régulation entre le niveau N3 et le niveau formant poubelle N4. Le MLTB est utilisé par la régulation pour réaliser le changement d'un élément vers un autre niveau que son niveau d'origine.

Les données manipulées au sein du MLTB sont des références (pointeurs) vers le buffer de régulation 4.

On présente maintenant, en relation avec la figure 6, une structure de données à double référencement, entre le buffer de régulation 4 et le MLTB, selon un mode de réalisation particulier de l'invention.

Chaque niveau du MLTB contient des premiers pointeurs vers les unités de données stockées dans le buffer de régulation 4. Pour mémoire, chaque unité de données présente des indicateurs {P, D, T, Q} et des données de codage. Sur la figure 6, les premiers pointeurs du niveau N1 sont référencés 91₁, 91₂,..., ceux du niveau N2 sont référencés 92₁, 92₂,... etc.

Dans chaque niveau du MLTB, les premiers pointeurs de données sont classés par ordre de pondération (comme symbolisé par la flèche référencée 93). Pour un même niveau de pondération, les pointeurs vers les données de DTS les plus anciens sont placés en premier. Cette organisation permet de trouver immédiatement les unités de données les moins prioritaires et les unités de données les plus prioritaires. L'ajout de nouvelles données dans le MLTB respecte cette règle.

Outre les unités de données O_Data et R_Data, le buffer de régulation 4 contient des seconds pointeurs vers les premiers pointeurs au sein du MLTB. Cette structure à double référencement (premiers et seconds pointeurs), symbolisée par les flèches référencées 95, permet notamment de retrouver efficacement les unités de données d'une AU qui sont réparties dans le MLTB.

Dans le MLTB, un seau de jetons est affecté pour chaque niveau de régulation N1, N2 et N3, avec un nombre de jetons fixé en fonction de la consigne de débit pour ce niveau de régulation et de la taille du buffer de régulation 4. Le fonctionnement du MLTB en mode cumulé est particulièrement avantageux pour les flux hiérarchiques car un niveau de qualité fournit à un usager est le cumul de tous les niveaux de débits inférieurs.

La sortie d'une unité de données du buffer de régulation 4 libère des ressources en jetons disponibles. L'ajustement des ressources disponibles est alors calculé par le module d'ajustement 7, par niveau de régulation.

Le principe de la régulation effectuée par le module de régulation 8 est le suivant pour une nouvelle unité de données considérée de type O_Data ou R_Data et classée dans un niveau de régulation initial en fonction d'un niveau de qualité indiqué par certaines au moins des indicateurs P, D, T, Q associées à l'unité de données, lorsqu'une ressource en débit disponible pour le niveau de régulation initial n'est pas suffisante pour transmettre l'unité de donnée :
- on compare entre elles des unités de données classées dans le niveau de régulation initial de la deuxième unité de données considérée ;
- - on sélectionne au moins une unité de données à reclasser parmi les unités de données comparées, en fonction d'au moins un critère de sélection déterminé et on reclasse ladite unité de données sélectionnée dans un niveau de régulation moins prioritaire que le niveau de régulation initial de la deuxième unité de données considérée .

Une telle régulation permet ainsi de comparer des unités de données dans le buffer de régulation 4 sur le plan de leur apport respectif (suivant les modes de réalisation, ces unités de données comparées sont de type O_Data et/ou R_Data) au flux de données en fonction des unités de données précédemment transmises et de reclasser dans les niveaux de régulation supérieurs (y compris le niveau fictif N4) celles qui sont le moins utiles.

Lors de l'entrée d'une nouvelle unité de données, le module de régulation lui attribue un niveau de régulation initial (flèche 26 sur la figure 2), puis un ou plusieurs reclassements ultérieurs peuvent être effectués par le module de régulation 8 pour cette unité de données (flèche 26' sur la figure 2).

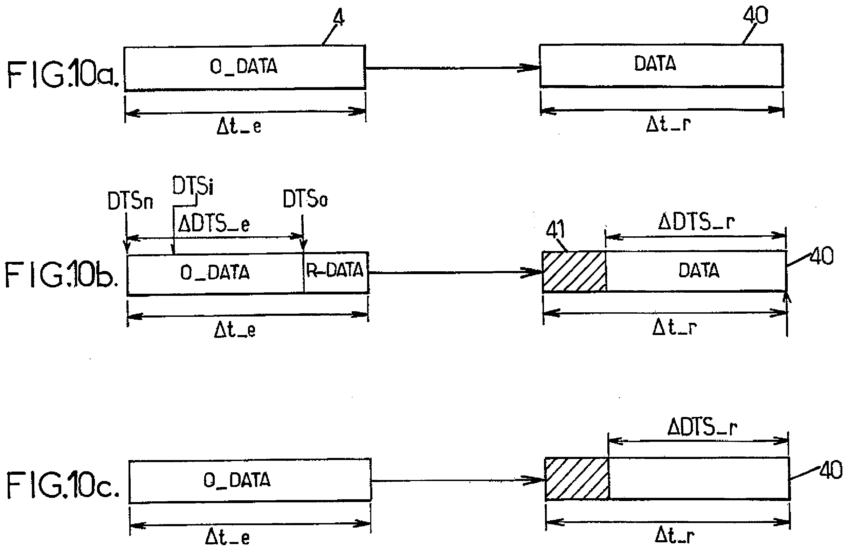

Le dispositif 1 d'adaptation de flux de données scalable décrit ci-dessus est adapté pour opérer dans trois états de fonctionnement distincts décrits ci-dessous en référence aux figures 10.a, 10.b et 10.c, représentant le buffer de régulation 4 du dispositif 1 et le buffer de réception 40 d'un terminal décodant les données reçues dans le niveau de régulation N1 et éventuellement dans un ou plusieurs des niveau de régulation supérieurs transmis depuis le buffer de régulation 4.

On nomme Δt_e l'intervalle de temps nécessaire pour l'émission de la totalité de la contenance du buffer de régulation 4 Δt_r l'intervalle de temps constant nécessaire pour exploiter la totalité de la contenance du buffer de réception 40 considéré à un instant donné, ΔDTS_e est l'intervalle de temps entre la première AU et la dernière AU des données O_Data du buffer de régulation 4 et ΔDTS_r est l'intervalle de temps entre la première AU et la dernière AU des données du buffer de réception 40.

La partie O_Data contient au minimum les AUs à transmettre sur l'intervalle constant DTSi - DTS₀. Le nombre de jetons attribués à cet intervalle dépend des retransmissions et de la présence d'unités de données O_Data supplémentaires associées à un DTSn > DTSi résultant de ces retransmissions.

### Fonctionnement du dispositif 1 dans l'état stabilisé

Le premier état de fonctionnement du dispositif 1, dit état stabilisé, est décrit ci-dessous en référence à la figure 10.a.

Dans l'état stabilisé, aucune retransmission n'est requise. Les seules unités de données contenues dans le buffer de régulation 4 sont des données O_Data, considérées sous forme de NALUs.

Les relations suivantes sont vérifiées : ΔDTS_e = Δt_e et ΔDTS_r = Δt_r.

Le dispositif 1 reste dans ce mode stabilisé tant qu'aucune retransmission n'est requise.

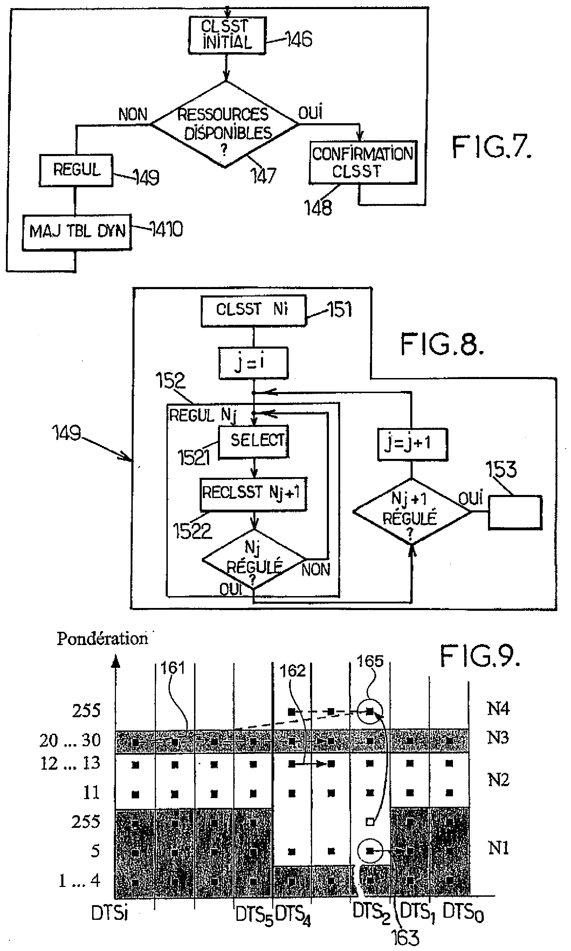

On présente maintenant, en relation avec l'organigramme de la figure 7, un mode de réalisation particulier de l'algorithme de régulation mis en oeuvre par le module de régulation 8 dans cet état stabilisé, pour chaque nouvelle unité de données O_Data considérée qui entré dans le buffer de régulation 4.

Dans une étape 146, on détermine un niveau de régulation initial Ni (i entier compris dans l'intervalle [1,3]) associé à la nouvelle unité de données considérée. Ce niveau de régulation initial est fourni par la table de classement dynamique 6 en fonction d'un niveau de qualité associé à cette unité de données considérée et indiqué par certains au moins des indicateurs {P, D, T, Q}.

Dans une étape 147, on détecte si les jetons disponibles du niveau de régulation Ni suffisent pour transmettre la nouvelle unité de données considérée.

Si les jetons disponibles du niveau Ni suffisent, alors dans une étape 148, l'unité de donnée considérée est classée dans le niveau Ni et les jetons nécessaires du niveau Ni lui sont attribués. Puis on revient à l'étape 146 en considérant cette fois une nouvelle unité de données entrée dans le buffer de régulation 4.

Si au contraire les jetons disponibles du niveau Ni ne suffisent pas pour l'unité de donnée considérée, alors dans une étape 149, on effectue une régulation de l'ensemble des unités de données de tous les niveaux de régulation N1, N2 et N3 du MLTB, puis dans une étape 1410, on met à jour la table de classement dynamique 6 concernant les changements de niveaux de régulation effectués. Ensuite on revient à l'étape 146 en considérant une nouvelle unité de données entrée dans le buffer de régulation 4.

On présente maintenant, en relation avec la figure 8, le détail de l'étape 149 de régulation des unités de données des niveaux de régulation du MLTB.

Dans une étape 151, l'unité de données en entrée considérée est ajoutée au niveau Ni. Le nombre de jetons disponibles dans ce niveau de régulation est alors négatif.

On effectue alors une ou plusieurs itérations du processus suivant.

Lors de la première itération (j=i), on passe à une étape 152 de régulation du niveau Ni comprenant une étape 1521 de sélection d'une unité de données, parmi celles classées dans le niveau de régulation courant et repérées par les doubles pointeurs 95. Un critère de sélection consiste à prendre l'unité de donnée ayant la pondération la plus élevée et, à pondération égale, le DTS le plus élevé (correspondant à une lecture la plus tardive).

Dans une étape 1522, l'unité de données sélectionnée est reclassée au niveau Nj+1, libérant ainsi les jetons qui lui étaient associés au niveau Nj. Puis à l'étape 1523, on vérifie si le reclassement de cette donnée a suffi pour réguler le niveau de régulation Nj traité, c'est-à-dire si le nombre de jetons disponibles dans le niveau de régulation Nj est alors positif ou nul. On réitère les étapes 1521 à 1523 jusqu'à ce que le nombre de jetons disponibles dans le niveau de régulation Nj soit positif ou nul.

Lorsque le nombre de jetons disponibles dans le niveau de régulation Nj a été déterminé positif ou nul, on détermine si le niveau Nj+1 est régulé, c'est-à-dire si le nombre de jetons disponibles dans le niveau de régulation Nj+1, au vu des unités de données classées au niveau Nj+1, est positif ou nul. Si c'est bien le cas, le processus de régulation est terminé (étape 153).

Sinon, on réitère l'étape 152 de régulation en vue de la régulation du niveau Nj+1 etc., jusqu'à ce que chaque niveau supérieur à Ni ait été régulé, et ce jusqu'au niveau N3.

Une itération de l'étape 152 relative au niveau N3 comprend le cas échéant un ou plusieurs reclassements dans le niveau N4 de régulation fictif formant poubelle.

La figure 9 présente un exemple de répartition, dans le mode de fonctionnement stabilisé, des données (représentés par des carrés noirs) dans les trois niveaux de régulation N1, N2, N3 et le niveau de régulation fictif formant poubelle N4.

Chaque AU est représentée par une colonne d'unité de données pouvant avoir un nombre différent d'unités de données. Lors de la régulation, les unités de données sont sélectionnées pour être affectées à un niveau de régulation.

Le nombre de données classés dans un niveau de régulation peut varier d'un DTS à l'autre, en fonction du débit affecté à ce niveau de régulation. Ainsi, dans cet exemple, on note une diminution du débit affecté au niveau N1, entre DTS₁ et DTS₂, puis une augmentation de ce débit entre les DTS₄ et DTS₅. De façon complémentaire, on note une augmentation du débit affecté au niveau N2, entre DTS₁ et DTS₂, et une diminution de ce débit entre DTS₄ et DTS₅. En revanche, le débit affecté au niveau N3 reste constant.

Lors d'un changement de débit, les dépendances sont prises en compte lors de la sélection des unités de données. Ainsi, une unité de donnée n'aura pas de dépendance vis-à-vis d'une autre unité de donnée placée dans un niveau supérieur (de priorité plus faible).

La flèche en pointillé référencée 161 illustre l'ordre de parcours pour le reclassement des unités de données. Les unités de données reclassées en premier sont celles ayant la pondération la plus forte et le DTS le plus récent (proche de DTS₀).

Chacune des flèches référencées 162 et 163 illustre la dépendance entre deux unités de données. On rappelle qu'une unité de donnée d'un niveau de régulation N ne peut dépendre que d'une unité du même niveau de régulation N ou d'un niveau de régulation N' moins prioritaire (N'>N).

Cette figure 9 illustre également le (re)classement de deux unités de données, conformément à l'exemple de table de classement dynamique 6 ci-dessus (voir la cinquième ligne et la dernière ligne), suite à une réduction du débit affecté au niveau N1 :
- l'unité de donnée référencée 164 est (re)classée dans le niveau 2 ; et
- l'unité de donnée référencée 165 est (re)classée dans le niveau 4 (poubelle).

### Fonctionnement du dispositif 1 dans l'état de retransmission :

Le deuxième état de fonctionnement du dispositif 1, dit état de retransmission, est décrit ci-dessous en référence à la figure 10.b.

Le dispositif 1 passe dans l'état de retransmission dès qu'au moins une retransmission est requise. Chaque unité de données de type R_Data ajoutée dans le buffer de régulation 4 est alors traitée par le module de régulation 8.

Les unités de données à retransmettre sont prioritaires dans l'ordre de transmission (puisqu'associée à un ou des DTS plus anciens que ceux associés aux données de type O_Data).

Le rythme de fourniture des AUs au buffer de régulation 4 par le buffer de réserve 3 est constant. Ainsi le nombre d'AUs dans le buffer de régulation 4 augmente tant que des unités de données de retransmission de type R_Data sont transmises par le dispositif 1 à destination des terminaux, bloquant ainsi la transmission des unités de données de type O_Data. La quantité de données O_Data dans le buffer de régulation 4 diminue lorsque la quantité de données R_Data augmente (puisque la taille du buffer de régulation 4 est constante). La relation suivante est alors vérifiée : ΔDTS_e ≥ Δt_e.

Les unités de données retransmises ne sont pas ajoutées à la suite des unités de données stockées dans le buffer de réception 40, mais elles remplissent les manques relatifs aux données originales initialement identifiées comme perdues. Comme les unités de données sont exploitées au niveau du terminal à vitesse constante, un vide 41 se crée en fin du buffer de réception 40. La relation suivante est alors vérifiée : ΔDTS_r ≤ Δt_r.

Le dispositif 1 reste dans cet état de retransmission tant que des retransmissions sont requises.

Pour chaque nouvelle unité de données R_Data entrée dans le buffer de régulation 4 et associée à des indicateurs {P, D, T, Q}, des étapes similaires à celles référencées 146 à 149 décrites en référence aux figures 7 et 8 sont réalisées en considérant cette nouvelle unité de données à la place de l'unité de données précédemment considérée O_Data.

Dans le mode de réalisation considéré, la table de classement dynamique 6 est réinitialisée lors de l'entrée d'une nouvelle image de référence, par exemple lors de l'entrée de la première image d'un nouveau GOP.

Ainsi lorsque de l'arrivée dans le buffer de régulation 4 d'une unité de données de référence du flux 2, on supprime la mémorisation des reclassements effectués pour des unités de données d'un GOP du flux 2 qui précède le GOP de cette dernière unité de données de référence.

Il existe différentes techniques pour attribuer à l'étape 146 un niveau de régulation initial à une nouvelle unité de données de type R_data considérée, qui ne fait pas partie du GOP courant correspondant à la table de classement dynamique 6. Il existe en outre différentes techniques pour mettre en œuvre la régulation à l'étape 149 lorsqu'une nouvelle unité de données de type R_Data est considérée.

Deux modes de réalisation pour la régulation effectuée dans l'état de retransmission sont décrits ci-dessous pour une nouvelle unité de données R_Data considérée, entrée dans le buffer de régulation 4 et associée à des indicateurs {P, D, T, Q}.

### Mode de réalisation 1 :

Dans ce mode de réalisation, à l'étape 146, un niveau de régulation initial Ni est affecté à la nouvelle unité de données R_Data considérée par le module de régulation 8, en fonction du niveau de régulation correspondant, d'après la table de classement dynamique 6 courante, aux indicateurs {P, D, T, Q} de la nouvelle unité R_Data. Le classement stocké dans la table de classement dynamique concernant le GOP des données O_Data dernièrement reçu dans le buffer de régulation 4 est donc ici utilisé pour les unités de données R_Data qui font partie d'un GOP antérieur.

De même, une pondération lui est affectée par le module de régulation 8 en fonction de la pondération correspondant à ces indicateurs dans la table de classement statique 5.

A l'étape 147, on détecte si les jetons disponibles du niveau de régulation Ni suffisent pour transmettre la nouvelle unité de données R_Data considérée.

_Si les jetons disponibles du niveau Ni suffisent, alors dans une étape 148, l'unité de donnée considérée R_Data est classée dans le niveau Ni et les jetons nécessaires du niveau Ni lui sont attribués. Puis on revient à l'étape 146 en considérant cette fois une nouvelle unité de données entrée (R_Data ou O_Data) dans le buffer de régulation 4.

Si au contraire les jetons disponibles ne sont pas suffisants, l'étape 149 est mise en œuvre.

Alors, dans une étape 151, l'unité de données R_Data considérée est ajoutée au niveau Ni. Le nombre de jetons disponibles dans ce niveau de régulation est alors négatif.

On compare alors les unités de données classées dans le niveau de régulation Ni et on sélectionne une des unités de données comparées à l'aide d'un critère de sélection. Les unités de données comparées comprennent, si le nombre de retransmissions est modéré, une ou plusieurs unités de données de type O_Data, la donnée R_Data considérée et éventuellement d'autres unités de données de type R_Data.

Un critère de sélection possible consiste à prendre l'unité de donnée ayant la pondération la plus élevée et, à pondération égale, le DTS le plus élevé (correspondant à une lecture la plus tardive).

Puis l'unité de données sélectionnée est reclassée au niveau Ni+1, libérant ainsi les jetons qui lui étaient associés au niveau Ni etc. jusqu'à ce le niveau Ni et l'ensemble des niveaux supérieurs au niveau Ni aient été régulés.

La table de classement dynamique 6 est mise à jour lorsque des reclassements impactent des unités de données du dernier GOP entré dans le buffer de régulation.

Par ailleurs, pour chaque nouvelle unité de données O_Data entrée dans le buffer de régulation 4, le processus décrit ci-dessus est réitéré en considérant cette nouvelle donnée O_Data à la place de la précédente unité considérée R_Data.

Dans un tel mode de réalisation, lorsque le débit disponible pour le niveau Ni n'est pas suffisant, les unités de données R_Data et O_Data classées dans le même niveau de régulation Ni sont ainsi comparées entre elles quant à leur apport réel à la qualité du flux, au vu de la qualité déjà transmise, pour décider de celle(s) à supprimer du niveau de régulation considéré en vue de respecter le débit associé.

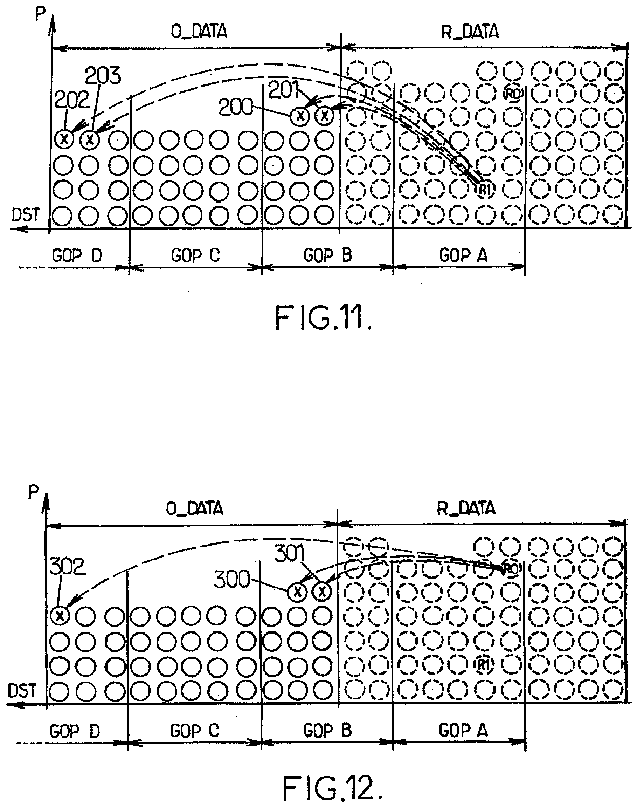

Les figures 11 et 12 (a figure 11 est utilisée ci-dessous pour illustrer un exemple de mise en œuvre du mode de réalisation 1 ; la figure 12 est utilisée plus loin pour illustrer un exemple de mise en œuvre du mode de réalisation 2) représentent en traits pleins le contenu du buffer de régulation relatif à un niveau de régulation N, dans un dispositif similaire au dispositif 1 considéré ci-dessus à l'exception qu'on considère un niveau poubelle et un seul niveau de régulation N associé à une consigne de débit non nulle.

Les unités de données sont ordonnées sur l'axe horizontal en fonction du DTS qui leur sont associées et sur l'axe vertical en fonction de la pondération.

Dans la partie O_Data, les unités de données dans les pondérations supérieures dont la non transmission a été décidée dans le cours de la régulation ne sont pas représentées. Seules sont représentées dans la partie O_Data les unités de données couramment affectées au niveau N de régulation par le mécanisme de régulation.

Les traits pointillés indiquent les unités de données précédemment transmises par le dispositif dans le niveau N.

Le buffer de régulation contient ainsi des unités de données figurant dans quatre GOP distincts : A, B, C, D.

Lors de son arrivée dans le buffer de régulation, l'unité de données à retransmettre R1, dans le mode de réalisation 1, est d'abord affectée au niveau de régulation N (niveau courant indiqué pour les unités de données du GOP D, GOP le plus récent, par la table de classement dynamique en fonction de indicateurs {P, D, T, Q} associés à l'unité de données R1.

Si le débit disponible pour le niveau N n'est pas suffisant pour retransmettre l'unité de données R1, la régulation effectuée telle que décrite ci-dessus supprimera d'abord l'unité de données O_Data 200 (suppression par classement dans le niveau de régulation formant poubelle), puis si nécessaire l'unité de données O_Data 201 du GOP B. Si le débit libéré ne suffit pas, les unités de données 202, puis 203 du GOP D seront successivement supprimées. Seules ces deux dernières suppressions donneront lieu à une mise à jour de la table de classement dynamique.

L'unité de données, R0 arrivée dans le buffer de régulation dans le mode de réalisation 2 ne sera pas transmise selon le mécanisme de régulation décrit ci-dessus (niveau de qualité supérieur au niveau de qualité transmis dans le niveau de régulation N données du GOP D courant selon la table de classement dynamique.

L'inconvénient est que les unités de données reçues par le terminal et dépendant de R0 ne pourront donc pas être décodées. Il est préférable que le terminal n'affiche donc pas de mosaïque ou de gels d'images pour des unités de données qu'il ne peut traiter.

Un avantage apporté par le mode de réalisation 1 est qu'il effectue un lissage de la qualité globale sur l'ensemble des unités de données de type R_data et O_Data contenues dans le buffer de régulation. L'amélioration de la qualité perçue par l'utilisateur est relativement constante et agréable, car l'utilisateur est plus sensible aux variations relatives de la qualité qu'au niveau global de qualité.

### Mode de réalisation 2 :

Dans ce mode de réalisation, il est mémorisé, dans le buffer de retransmission 11, une information indiquant, par AUs, le plus haut niveau de qualité transmis. Cette information est indiquée par exemple par des valeurs de certains au moins des indicateurs par exemple de type {P, D, T, Q}. Cette information est réactualisée en fonctions des demandes de retransmission supprimées par le module de décision 12 et en fonction des reclassements effectués lors de la régulation pour des unités de données R_Data. Lorsqu'une demande de retransmission porte sur une unité de données associée à des indicateurs {P, D, T, Q}, le module de décision 12 compare ces indicateurs à l'information mémorisée relative au plus haut niveau de qualité actualisé transmis pour l'AU dont faisait partie l'unité de données et décide en fonction de cette comparaison de retransmettre ou non l'unité de données. Si le niveau de qualité indiqué par les indicateurs {P, D, T, Q} associés à l'unité de données à retransmettre est strictement supérieur à celui mémorisé pour l'AU, l'unité de données n'est pas fournie par le module de décision 12 au buffer de régulation. Sinon, l'unité de données est fournie par le module de décision 12 au buffer de régulation 4.

Dans ce mode de réalisation, pour chaque nouvelle unité de données R_Data entrée dans le buffer de régulation 4 et associée à des indicateurs {P, D, T, Q}, un niveau de régulation initial Ni lui est affecté par le module de régulation 8 en fonction par exemple du niveau de régulation correspondant à ces indicateurs dans la table de classement statique 5 et une pondération lui est affecté par le module de régulation 8 en fonction de la pondération correspondant à ces indicateurs dans la table la table de classement statique 5.

Puis, le processus de régulation décrit ci-dessus dans le cas de l'état de fonctionnement stabilisé est mis en œuvre sur les unités de données O_Data, si le débit disponible pour le niveau de régulation Ni n'est pas suffisant pour transmettre la nouvelle unité de données R_Data.

La table de classement dynamique 6 est mise à jour lorsque des reclassements impactent des unités de données du dernier GOP entré dans le buffer de régulation.

Ainsi seules les unités de données O_Data sont reclassées dans des niveaux de priorité inférieure.

La régulation n'a ainsi lieu que sur la partie O_Data du buffer de régulation 4, en vue de dégager le débit disponible pour transmettre la nouvelle unité de données R_Data. Le classement des données R_Data n'est donc pas modifié par cette régulation.

Pour chaque nouvelle unité de données O_Data entrée dans le buffer de régulation 4, le processus de régulation décrit dans l'état de fonctionnement stabilisé est réitéré en considérant l'ensemble des données O_Data.

De façon similaire à la figure 11, la figure 12 représente en traits pleins le contenu du buffer de régulation relatif à un niveau de régulation N, dans un dispositif similaire à au dispositif 1 considéré ci-dessus à l'exception qu'on considère seulement un seul niveau de régulation N associé à une consigne de débit non nulle et un niveau poubelle.

Lors de son arrivée dans le buffer de régulation, l'unité de données à retransmettre R0, dans le mode de réalisation 2, est affectée au niveau de régulation N.

Si le débit disponible pour le niveau N n'est pas suffisant pour retransmettre l'unité de données R0, la régulation effectuée telle que décrite ci-dessus supprimera d'abord l'unité de données O_Data 300, puis si nécessaire l'unité de données O_Data 301. Si le débit libéré ne suffit pas, les unités de données 302 sera supprimée. Seule cette dernière suppression donnera lieu à une mise à jour de la table de classement dynamique.

De même l'unité de données R1 arrivée ensuite dans le buffer de régulation dans le mode de réalisation 3 donnera lieu, si le débit nécessaire à sa retransmission n'est pas disponible, à la suppression d'une ou plusieurs unités de données O_Data.

Ce mode de réalisation 3 favorise les retransmissions au détriment des unités de données de type O_Data. Ainsi la prise en compte de l'unité de données R0 donne lieu à la perte d'unités de données de type O_data plus prioritaires globalement pour la qualité du flux transmis.

Dans un mode de réalisation, une taille maximale pour la totalité des unités de données R_Data est fixée en pourcentage de la taille du buffer de régulation. Si des retransmissions sont requises alors que la taille maximale a été atteinte par les données R_Data, la requête de retransmission est refusée. Dans ce cas, les NALUs présentes dans la partie O_Data et qui dépendent des unités de données pour lesquelles la retransmission a été refusées sont supprimées de O_Data.

### Fonctionnement du dispositif 1 dans l'état de rattrapage :

Le troisième état de fonctionnement du dispositif 1, dit état de rattrapage, est décrit ci-dessous en référence à la figure 10.c.

Le dispositif 1 passe dans l'état de rattrapage suite à un fonctionnement en état de retransmission dès lors qu'aucune unité de données n'a plus à être retransmise (la partie R_Data est alors vide).

La régulation effectuée pour chaque nouvelle unité de données entrée dans le buffer de régulation est égale à celle décrite lors de la description de l'état de fonctionnement stabilisé.

Il y a alors plus de AUs dans le buffer de régulation 4 que dans la phase stabilisé. Les AUs transmises ont une taille réduite par rapport à la taille des AUs du buffer de régulation dans l'état stabilisé. La fréquence d'envoi des AUs est plus élevée que celle dans l'état stabilisé.

Progressivement, la valeur ΔDTS_e décroît et se rapproche de Δt_e. Dès que ΔDTS_e = Δt_e, le dispositif 1 entre à nouveau en état de fonctionnement stabilisé. Simultanément et progressivement la valeur ΔDTS_r croît pour atteindre Δt_r. Si des unités de retransmission sont ajoutées dans le buffer de régulation, le dispositif 1 reprend l'état de fonctionnement de retransmission. Ce mode de fonctionnement est obtenu automatiquement à partir du contrôle des jetons par la régulation.

Dans un mode de réalisation, le critère de décision, vérifié par le module de décision 12 afin de fournir ou non à l'entrée du buffer de régulation 4 une unité de données à retransmettre, est le suivant : on compare le DTS associé à l'unité de données à retransmettre à une valeur limite égale à DTSn - ΔDTS_e - Δt_r + RTTmax, avec RTTmax égal au temps maximum de transmission sur le réseau entre le dispositif 1 et le terminal, DTSn la valeur DTS de la dernière AU des données O_Data entrée dans le buffer de régulation 4, et DTSo la valeur DTS de la première AU des données O_Data à sortir du buffer de régulation 4. En phase stabilisée DTSn = DTSi, et en phase de retransmissions DTSn > DTSi. Cette différence marque l'avancement des AU dans le temps, même si les O_Data sont temporairement bloquées par les retransmissions.

Si le DTS associé à l'unité de donnée à retransmettre est supérieur ou égal à la valeur limite, le module de décision 12 fournit l'unité de données à retransmettre en entrée du buffer de régulation 4. Sinon, le module de décision 12 supprime l'unité de données à retransmettre du buffer de retransmission 13 et ne fournit pas l'unité de données à retransmettre à l'entrée du buffer de régulation.

Il a été décrit ci-dessus un mode de réalisation avec 3 niveaux de régulation effectifs et un niveau de régulation formant poubelle. Bien sûr, le nombre de niveaux de régulation peut être tout nombre supérieur ou égal à 2. Dans un mode de réalisation, le nombre de niveaux considéré est égal à 2 : un premier niveau de régulation associé à un débit non nul et un second niveau de régulation fictif formant poubelle. Dans un tel cas, la sélection dans le premier niveau de régulation d'une unité de données à reclasser est effectuée par exemple en fonction de la classification {P, D, T, Q}.

Le reclassement des données effectué selon l'invention optimise la qualité du flux effectivement transmis aux terminaux. Le flux transmis après régulation comprend à la fois les unités de données transmises pour la première fois et celles retransmises après que leur pertes ait été signalée, et respecte la ou les consignes de débit maximum donnée(s) par niveau de régulation.

En effet, le but est qu'une unité de données transmise à un terminal, qu'elle soit initialement transmise ou retransmise depuis le dispositif 1, ne puisse être inexploitable du fait de la transmission d'une unité de données dont elle dépendrait. Le but visé est aussi que le flux transmis, comportant les unités de données transmises pour la première fois et retransmises, fournisse le plus haut niveau de qualité dans la limite de la consigne de débit de transmission.

Le reclassement d'une unité de données effectué dans le cadre de la régulation décrite ci-dessus n'implique pas un nouveau marquage (pas de nécessité d'insérer d'un nouvel indicateur dans un en-tête de l'unité de données) de l'unité de données et n'implique donc aucune modification de cette unité de données. Ce reclassement n'est pas porté par l'unité de données reclassée, et est géré entièrement et uniquement par le dispositif mettant en œuvre le procédé d'adaptation de l'invention. Dans un mode de réalisation particulier de l'invention, ce reclassement a pour conséquence la transmission de l'unité de données dans un moyen de transmission spécifiquement associé à un niveau de régulation de reclassement (on notera que si les retransmissions sont transmises dans une session RTP, ce mode de réalisation particulier est indispensable pour garder la cohérence des numéros de séquence SN sur la session contenant les O_Data).

Un avantage de la régulation selon l'invention est aussi de lisser la qualité du flux décodé, en suite à la régulation du classement des données sur la totalité du buffer de régulation, en comparant ainsi pour chaque reclassement à la fois les données O_Data du flux 2 et lorsqu'elles existent les données à retransmettre (données R_Data). Un ajustement est réalisé entre les données à transmettre et celles à retransmettre. Il n'y a donc pas la contrainte des solutions connues de retransmission de devoir réserver un débit fixe pour les retransmissions.

Un avantage de la régulation selon l'invention est aussi qu'il n'est pas nécessaire de calculer des seuils pour la mise en oeuvre du mécanisme de régulation.

Du fait du maintien du débit global de transmission à la consigne de débit global, l'invention est particulièrement bien adaptée aux liaisons de type ADSL pour lesquelles le débit vidéo est ajusté à la capacité maximum de la liaison.

Un procédé selon l'invention est mis en œuvre par exemple dans des équipements tels que serveur de flux ou nœud intermédiaire d'un réseau de transmission.

## Revendications

1. Procédé d'adaptation d'un flux de données scalable (2) comprenant des premières unités de données (O_Data) et définissant une pluralité de niveaux de qualité et de débit selon le nombre et le type d'unités de données utilisées, les types d'unités utilisés comprenant au moins les premières unités de données et des deuxièmes unités de données correspondant à des données signalées comme étant à retransmettre,
le procédé d'adaptation dudit flux de données scalable (2) étant réalisé en fonction des deuxièmes unités de données (R_Data),
selon lequel chaque unité de données parmi les premières et deuxièmes unités de données à transmettre est initialement classée dans un niveau initial respectif (N1, N2, N3, N4) parmi la pluralité de niveaux,
et selon lequel, pour une deuxième unité considérée classée dans un niveau initial, lorsqu'une ressource en débit disponible pour ledit niveau n'est pas suffisante pour transmettre ladite deuxième unité dans le flux de données, on met en œuvre un mécanisme de régulation relativement à la deuxième unité, selon lequel :
- on compare entre elles des unités de données comprenant au moins une première unité et classées dans le niveau initial de la deuxième unité considérée, on sélectionne au moins une desdites unités de données en fonction d'au moins un critère de sélection déterminé et on reclasse ladite unité de données sélectionnée dans un niveau moins prioritaire que ledit niveau initial de la deuxième unité considérée.

2. Procédé selon la revendication 1, selon lequel l'ordre de transmission des premières et deuxièmes unités de données dans le flux de données adapté (24) est déterminé en fonction d'informations d'horodatage (DTSᵣⱼ) pour le décodage associées auxdites unités de données.

3. Procédé selon l'une quelconque des revendications précédentes, selon lequel au moins un des niveaux (N4) est un niveau de non retransmission tel que les unités de données qui y sont classées ne sont pas transmises.

4. Procédé selon la revendication 3, selon lequel :
- lorsqu'une deuxième unité de données est classée dans ledit niveau de non retransmission, on actualise une information, associée à un groupe d'unités de données précédemment transmises comprenant ladite deuxième unité de données et représentative d'un niveau de qualité du groupe tel qu'effectivement transmis ;
- pour une deuxième unité de données du groupe ultérieurement indiquée comme étant à retransmettre, la retransmission de ladite deuxième unité est effectuée en fonction au moins d'une comparaison entre l'information actualisée associée au groupe et une information de marquage portée par ladite unité de données et indiquant un niveau de qualité.

5. Procédé selon l'une quelconque des revendications précédentes, selon lequel lorsque la ressource en débit disponible pour le niveau initial n'est pas suffisante pour transmettre la deuxième unité considérée classée dans le niveau initial, les unités de données comparées en vue de la sélection lors de la mise en œuvre du mécanisme de régulation sont des premières unités classées dans le niveau initial de la deuxième unité considérée.

6. Procédé selon l'une quelconque des revendications 1 à 4, selon lequel lorsque la ressource en débit disponible pour le niveau initial n'est pas suffisante pour transmettre la deuxième unité considérée classée dans le niveau initial, les unités de données comparées en vue de la sélection lors de la mise en œuvre du mécanisme de régulation sont des premières et deuxièmes unités classées dans le niveau initial de la deuxième unité considérée.

7. Procédé selon l'une quelconque des revendications précédentes, selon lequel l'étape de sélection d'une unité de données et/ou le classement d'une unité de données dans un niveau initial (N1, N2, N3) est effectué(e) au moins en fonction d'une information de marquage portée par ladite unité de données et indiquant un niveau de qualité.

8. Programme d'ordinateur comprenant des instructions de code de programme pour l'exécution des étapes d'un procédé selon l'une quelconque des revendications précédentes lorsque ledit programme est exécuté sur un ordinateur.

9. Dispositif de retransmission (1) adapté pour recevoir un flux de données scalable (2) comprenant des premières unités de données (O_Data) et définissant une pluralité de niveaux de qualité et de débit selon le nombre et le type d'unités de données utilisées, ledit dispositif de retransmission étant adapté pour recevoir des demandes de retransmission de deuxièmes unités de données (R_Data) et pour mettre en œuvre un procédé selon l'une des revendications 1 à 7 pour retransmettre des deuxièmes unités de données.

10. Serveur de diffusion adapté pour transmettre un flux de données scalable (2) comprenant des premières unités de données (O_Data) et définissant une pluralité de niveaux de qualité et de débit selon le nombre et le type d'unités de données utilisées, les types d'unités utilisés comprenant au moins les premières unités de données et des deuxièmes unités de données correspondant à des données signalées comme étant à retransmettre, le serveur de diffusion étant adapté pour recevoir des demandes de retransmission de deuxièmes unités de données (R_Data) et pour mettre en œuvre un procédé selon l'une des revendications 1 à 7 pour retransmettre des deuxièmes unités de données et transmettre le flux de données scalable (2) adapté.

11. Flux de données scalable obtenu (24) suite à la mise en œuvre d'un procédé d'adaptation, selon l'une des revendications 1 à 7, d'un flux de données scalable d'origine (2), comprenant des premières unités de données (O_Data) et définissant une pluralité de niveaux de qualité et de débit selon le nombre et le type d'unités de données utilisées, les types d'unités utilisés comprenant au moins les premières unités de données et des deuxièmes unités de données correspondant à des données signalées comme étant à retransmettre, en fonction de deuxièmes unités de données (R_Data) correspondant à des données précédemment transmises dans le flux et signalées comme étant à retransmettre.

## Patentansprüche

1. Verfahren zum Anpassen eines skalierbaren Datenflusses (2), der erste zu übertragende Dateneinheiten (O_Data) aufweist und mehrere Qualitäts- und Durchsatzebenen je nach der Anzahl und der Art der verwendeten Dateneinheiten definiert,
wobei das Verfahren zum Anpassen des skalierbaren Datenflusses (2) in Abhängigkeit von zweiten Dateneinheiten (R_Data) durchgeführt wird, die Daten entsprechen, die als Daten signalisiert werden, die rückzuübertragen sind,
wobei jede Dateneinheit unter den ersten und zweiten zu übertragende Dateneinheiten anfänglich in einer jeweiligen Anfangsebene (N1, N2, N3, N4) unter den mehreren Ebenen klassifiziert wird,
und wobei für eine betreffende zweite Einheit, die in einer Ebene einer Anfangsklasse klassifiziert wird, wenn eine verfügbare Durchsatz-Ressource für die Ebene nicht ausreichend ist, um die zweite Einheit in dem Datenfluss zu übertragen, ein Regelmechanismus in Bezug auf die zweite Einheit umgesetzt wird, wobei:
- Dateneinheiten miteinander verglichen werden, die mindestens eine erste Einheit aufweisen und die in der Anfangsebene der betreffenden zweiten Einheit klassifiziert werden, mindestens eine der Dateneinheiten in Abhängigkeit von mindestens einem bestimmten Auswahlkriterium ausgewählt wird und die ausgewählte Dateneinheit in einer niederprioreren Ebene als die Anfangsebene der betreffenden zweiten Einheit wieder klassifiziert wird.

2. Verfahren nach Anspruch 1, wobei die Übertragungsreihenfolge der ersten und zweiten Dateneinheiten in dem geeigneten Datenfluss (24) in Abhängigkeit von Zeitstempelinformationen (DTSᵣⱼ) für das Decodieren, die mit den Dateneinheiten verbunden werden, bestimmt wird.

3. Verfahren nach einem der vorhergehenden Ansprüche, wobei mindestens eine der Ebenen (N4) eine Ebene der Nichtrückübertragung ist, derart, dass die Dateneinheiten, die darin klassifiziert werden, nicht übertragen werden.

4. Verfahren nach dem Anspruch 3, wobei:
- wenn eine zweite Dateneinheit in der Ebene der Nichtrückübertragung klassifiziert wird, eine Information aktualisiert wird, die mit einer Gruppe von Dateneinheiten verbunden wird, die zuvor übertragen worden sind, die die zweite Dateneinheit aufweist und für eine Qualitätsebene der Gruppe repräsentativ ist, so wie sie tatsächlich übertragen wird;
- für eine zweite Dateneinheit der Gruppe, die später als rückzuübertragend zu sein angegeben wird, das Rückübertragen der zweiten Einheit in Abhängigkeit von mindestens einem Vergleichen zwischen der aktualisierten Information, die mit der Gruppe verbunden wird, und einer Kennzeichnungsinformation, die von der Dateneinheit getragen wird und die eine Qualitätsebene angibt, durchgeführt wird.

5. Verfahren nach einem der vorhergehenden Ansprüche, wobei, wenn die verfügbare Durchsatzressource für die Anfangsebene nicht ausreichend ist, um die betreffende zweite Einheit, die in der Anfangsebene klassifiziert wird, zu übertragen, die Dateneinheiten, die verglichen werden, um beim Umsetzen des Regelmechanismus ausgewählt zu werden, erste Einheiten sind, die in der Anfangsebene der betreffenden zweiten Einheit klassifiziert werden.

6. Verfahren nach einem der Ansprüche 1 bis 4, wobei, wenn die verfügbare Durchsatzressource für die Anfangsebene nicht ausreichend ist, um die betreffende zweite Einheit, die in der Anfangsebene klassifiziert wird, zu übertragen, die Dateneinheiten, die verglichen werden, um beim Umsetzen des Regelmechanismus ausgewählt zu werden, erste und zweite Einheiten sind, die in der Anfangsebene der betreffenden zweiten Einheit klassifiziert werden.

7. Verfahren nach einem der vorhergehenden Ansprüche, wobei der Schritt des Auswählens einer Dateneinheit und/oder das Klassifizieren einer Dateneinheit in einer Anfangsebene (N1, N2, N3) mindestens in Abhängigkeit von einer Kennzeichnungsinformation, die von der Dateneinheit getragen wird und die eine Qualitätsebene angibt, durchgeführt wird.

8. Computerprogramm, das Programmcodebefehle für das Ausführen der Schritte eines Verfahrens nach einem der vorhergehenden Ansprüche aufweist, wenn das Programm auf einem Computer ausgeführt wird.

9. Vorrichtung zum Rückübertragen (1), die geeignet ist, um einen skalierbaren Datenfluss (2) zu empfangen, der erste zu übertragende Dateneinheiten (O_Data) aufweist und mehrere Qualitäts- und Durchsatzebenen je nach der Anzahl und der Art der verwendeten Dateneinheiten definiert, wobei die Vorrichtung zum Rückübertragen geeignet ist, um Rückübertragungsanfragen von zweiten Dateneinheiten (R_Data) zu empfangen und um ein Verfahren nach einem der Ansprüche 1 bis 7 umzusetzen, um zweite Dateneinheiten rückzuübertragen.

10. Verbreitungsserver, der geeignet ist, um einen skalierbaren Datenfluss (2) zu übertragen, der erste zu übertragende Dateneinheiten (O_Data) aufweist und mehrere Qualitäts- und Durchsatzebenen je nach der Anzahl und der Art der verwendeten Dateneinheiten definiert, wobei der Verbreitungsserver geeignet ist, um Rückübertragungsanfragen von zweiten Dateneinheiten (R_Data) zu empfangen und um ein Verfahren nach einem der Ansprüche 1 bis 7 umzusetzen, um zweite Dateneinheiten rückzuübertragen und den geeigneten skalierbaren Datenfluss (2) zu übertragen.

11. Skalierbarer Datenfluss (24), der infolge des Umsetzens eines Verfahrens zum Anpassen nach einem der Ansprüche 1 bis 7 eines skalierbaren Originaldatenflusses (2) erhalten ist, der erste zu übertragende Dateneinheiten (O_Data) aufweist und mehrere Qualitäts- und Durchsatzebenen je nach der Anzahl und der Art der verwendeten Dateneinheiten in Abhängigkeit von zweiten Dateneinheiten (R_Data), die Daten entsprechen, die zuvor in dem Fluss übertragen worden sind und als rückzuübertragend zu sein signalisiert sind, definiert.

## Claims

1. Method for adapting a scalable data flow (2) comprising first data units (O_Data) to be transmitted and defining a plurality of levels of quality and of bitrate according to the number and the type of data units used,
the method for adapting said scalable data flow (2) being carried out as a function of second data units (R_Data) corresponding to data signalled as having to be retransmitted,
according to which each data unit from among the first data units and second data units to be transmitted is initially classed in a respective initial level (N1, N2, N3, N4) from among the plurality of levels,
and according to which, for a second unit considered classed in an initial level, when a resource in terms of bitrate available for said level is not sufficient to transmit said second unit in the data flow, a regulating mechanism is implemented in relation to the second unit, according to which:
- data units which comprise at least one first unit and are classed in the initial level of the second unit considered are inter-compared, at least one of said data units is selected as a function of at least one determined selection criterion and said data unit selected is reclassed in a lower priority level than said initial level of the second unit considered.

2. Method according to Claim 1, according to which the order of transmission of the first data units and second data units in the adapted data flow (24) is determined as a function of decoding-related timestamping information (DTSᵣⱼ) associated with said data units.

3. Method according to any one of the preceding claims, according to which at least one of the levels (N4) is a non-retransmission level such that the data units which are classed therein are not transmitted.

4. Method according to Claim 3, according to which:
- when a second data unit is classed in said non-retransmission level, an information item, which is associated with a group of previously transmitted data units comprising said second data unit and is representative of a level of quality of the group such as actually transmitted, is revised;
- for a second data unit of the group, which unit is subsequently indicated as having to be retransmitted, the retransmission of said second unit is performed as a function at least of a comparison between the revised information item associated with the group and a marking information item carried by said data unit and indicating a level of quality.

5. Method according to any one of the preceding claims, according to which when the resource in terms of bitrate available for the initial level is not sufficient to transmit the second unit considered classed in the initial level, the data units compared with a view to the selection during the implementation of the regulating mechanism are first units classed in the initial level of the second unit considered.

6. Method according to any one of Claims 1 to 4, according to which when the resource in terms of bitrate available for the initial level is not sufficient to transmit the second unit considered classed in the initial level, the data units compared with a view to the selection during the implementation of the regulating mechanism are first units and second units classed in the initial level of the second unit considered.

7. Method according to any one of the preceding claims, according to which the step of selecting a data unit and/or the classing of a data unit in an initial level (N1, N2, N3) is performed at least as a function of a marking information item carried by said data unit and indicating a level of quality.

8. Computer program comprising program code instructions for the execution of the steps of a method according to any one of the preceding claims when said program is executed on a computer.

9. Retransmission device (1) adapted to receive a scalable data flow (2) comprising first data units (O_Data) to be transmitted and defining a plurality of levels of quality and of bitrate according to the number and the type of data units used, said retransmission device being adapted to receive requests for retransmission of second data units (R_Data) and to implement a method according to one of Claims 1 to 7 to retransmit second data units.

10. Broadcasting server adapted to transmit a scalable data flow (2) comprising first data units (O_Data) to be transmitted and defining a plurality of levels of quality and of bitrate according to the number and the type of data units used, the broadcasting server being adapted to receive requests for retransmission of second data units (R_Data) and to implement a method according to one of Claims 1 to 7 to retransmit second data units and transmit the adapted scalable data flow (2).

11. Scalable data flow obtained (24) subsequent to the implementation of a method of adaptation, according to one of Claims 1 to 7, of an original scalable data flow (2), comprising first data units (O_Data) to be transmitted and defining a plurality of levels of quality and of bitrate according to the number and the type of data units used, as a function of second data units (R_Data) corresponding to data previously transmitted in the flow and signalled as having to be retransmitted.
